# EUROPEAN PATENT SPECIFICATION

(11) **EP 0 857 286 B1**
(45) Date of publication and mention of the grant of the patent: **23.10.2002**
(21) Application number: 96927480.2
(22) Date of filing: 23.08.1996
(51) Int. Cl.: F26B 25/18, B65G 57/00, B65G 1/14

(54) **SEPARATOR FOR LUMBER STACKING**
STAPELLEISTE FÜR GESTAPELTES SCHNITTHOLZ
SEPARATEUR POUR DU BOIS DECOUPE EMPILE

(30) Priority: 23.08.1995 CA 2156761
(43) Date of publication of application: 12.08.1998
(73) Proprietor: Townsend, David, M., Langton, Ontario N0E 1G0 (CA)
(72) Inventor: Townsend, David, M., Langton, Ontario N0E 1G0 (CA)
(74) Representative: Beck, Michael Rudolf
(86) International application number: PCT/CA96/00570
(87) International publication number: WO 97/008505

(56) References cited:
- DE-C- 715 251
- DE-C- 829 425
- FR-A- 1 300 898
- US-A- 4 246 943
- US-A- 5 345 695

## Description

The present invention relates to an elongate separator for separating one or more pieces of lumber.

A "separator" as referred to herein is also commonly referred to as a "lath", "stick", "sticker", or "crosser", and is used in the lumber Industry to separate pieces of lumber in a stack, bundle, lift or the like (hereafter referred to as a "stack").

In the lumber industry timber is cut into boards or pieces which may be stacked in a shed or kiln to dry before shipping. Stacking may also be used to maintain lumber during shipping or storage. The boards in a stack are usually separated by separators running transversely to the length of the boards. An individual stack may be built up to a height of about 5 feet with the boards laid in a spaced and parallel relationship in courses, course upon course, with separators laid between the courses across the boards. Individual stacks may be piled on one another to create larger stacks for efficient storage using spacer blocks between the individual stacks. The spacer blocks are usually larger than a common separator lath; 4" x 4" (10 cm x 10 cm) as opposed to 1" x 1" (2.5 cm x 2.5 cm); but are usually made of the same material, for example low grade lumber such as spruce. The difference in size of the separators is not material to the invention, and spacer blocks are expressly included within the meaning of the term separator, where the context permits, in this specification. Drying air circulates in the spaces between the boards in each course and in the spaces provided by the separators between the boards of adjacent courses and between individual stacks.

An imprint or stain, sometimes called a "shadow" or "sticker stain", may be left on a board in an area where it has been In contact with a separator in a stack, Such staining may be partly due to the percolation of sugars and other chemicals from the separators to the lumber. It is also understood that staining may result from the fact that air cannot penetrate to the board surface covered by a separator to dry the wood and mould or spores grow in the residual moisture. A stain may be visible immediately after removal of a board from the stack or it may show later during finishing or staining of the wood. It renders lumber unmerchantable for certain end uses and sometimes is the cause of costly claims to mills from customers. It is a significant problem in the lumber industry, particularly with light coloured woods.

Attempts to solve this problem have been directed at minimising the contact area between a separator and the lumber in a stack. For example, U.S. Patent No. 3,907,130 discloses a plastics material separator for drying wood, which separator has a curved upper surface and a lengthwise groove along its bottom surface to reduce the area of contact. One disadvantage of this design is that a lengthwise groove does not facilitate circulation of air through the groove. End to end circulation along the long length of a separator through a small cross section groove is inefficient Consequently, the groove provides a protected area for mould and spores to cultivate. Another disadvantage is that equipment for manufacturing plastics separators is foreign to a lumber mill so a mill would need to buy prefabricated plastics separators from a remote factory. Manufacturing costs, transportation costs, availability, maintaining separator inventory at a mill and other factors augured against use of plastics separators and they did not replace the more common and readily available wooden separators.

Nevertheless, the lengthwise groove design to reduce contact area was adopted in the industry, but in wooden separators. It is not uncommon now to find wooden separators cut with top and bottom lengthwise grooves forming an "H" shaped cross section. The "H" separator reduces contact area and utilises the wood. resources of a mill but suffers the same disadvantage of poor air circulation along the long narrow grooves. The manufacture of such wooden separators may use equipment ordinary to a mill, but cutting lengthwise grooves requires close tolerances and straight separators to maintain the alignment of a groove to the long axis of a narrow separator. Further, manufacturing many separators may require many tools or many runs through the same tools.

DE-C-715-251 describes an elongate separator for separating one or mors pieces of lumber arranged in a plurality of courses to form a stack, the height of the separator being sufficient to separate two adjacent courses to permit air circulation between said two adjacent courses, the separator being ribbed top and bottom to give a better hold on the lumber.

However, this disclosure also has the disadvantage that the separators proposed are to be made of stone or synthetic material.

It is an object of the present invention to provide a separator for separating lumber which reduces the problems, as discussed above, encountered with prior art devices.

The invention, therefore, provides a separator as claimed in claims 1-8.

According to a first aspect of the present invention, an elongate separator as defined above is characterised in that the length of the separator is sufficient to span one or more pieces of lumber in a course, in that the grooves are spaced to define ridges profiled such that the separator is able to support pieces of lumber on the ridges with a reduced contact between the separator and the pleces of lumber, and in that the number and length of the grooves are arranged to facilitate efficient air circulation within the grooves.

An elongate separator of an embodiment of the invention provides a reduced contact area, and has improved air circulation as is discussed below,

As set out above, the provision of separators which are not made of wood can cause difficulties for the lumber industry, However, whilst it is currently preferred that an elongate separator of the invention be made of wood, it is to be understood that the invention is not limited to wooden separators. That is, a separator of the invention may be made of any suitable material.

A preferred embodiment of the present invention also extends to an elongate separator further comprising a plurality of second grooves traversing the length of the separator in another direction to traverse the first grooves and to form a cross-hatching of grooves to permit air circulation within the grooves, and to form a plurality of protrusions able to support pieces of lumber on the protrusions.

With an embodiment of a separator of the invention, as the grooves run across a short width of the separator, rather than along its length, air circulation through the grooves is much improved over prior art long groove separators. The grooves may run perpendicularly to the length of the separator or, diagonally, at an angle to the length.

The spacing between the grooves is not critical, although close spacing reduces the contact area between grooves, In a preferred embodiment, the grooves are spaced to present sharp peaks between them thus minimising the contact area with the lumber. In a preferred embodiment, the grooves are cut with the sharp peaks spaced about 3/4" (1.9 cm) apart and at a 60° angle to the long axis of the separator. Similar grooves are cut in the top and the bottom surfaces of the separator to provide peaks to contact the boards in the lumber stack.

In another embodiment, grooves are cut at a 60° angle to the longitudinal axis of the separator in one direction and further grooves are cut in an opposite direction to provide intersecting grooves. The ridge between the first run of grooves are cut by the traversing set of second grooves resulting in diamond shaped protrusions which further reduce the amount of surface area in contact with the lumber and provides for additional air circulation.

It will be appreciated that separator size, groove spacing and contact area should be sufficient to support the weight of the stack without denting the lumber to render it unmerchantable. However, the design of a stack to meet these criteria should be within the skill of those in the art such that further discussion is not necessary. It is similar to the design of a bed of nails to support a heavy body with a delicate surface on sharp points. The principle is that many points will support the weight of the body, but with little pressure on each point.

Manufacture of such separators is relatively easy. As the grooves run transversely to the length of the separator there is no difficulty aligning the narrow separator to a tool during manufacture. Close tolerances are not necessary nor are multiple tools required. The separators may be cut by an ordinary plane fitted with a serrated blade which forms grooves and peaks as separators are passed sideways through the plane. The angle at which the separators pass through the plane determines the angle of the grooves to the long axis of the separator. The angle is not critical, or is consistency of the angle between separators. Thus, it is unnecessary to maintain close tolerances in the feeding process. The manufacture also has the advantage that it can be used to clean and renew old dirty separators for reuse as separators of this invention. Thus it is not necessary for a lumber mill to discard its inventory of separators to use this invention.

Embodiments of the present invention will hereinafter be described, by way of example, with reference to the accompanying drawings, in which:-
Figure 1 is a perspective view of a stack of lumber separated by separators;
Figure 2 shows a perspective view of an embodiment of a separator of the invention having diagonal grooves;
Figure 3 is a perspective view of a further embodiment of a separator which has grooves at right angles to the long axis of the separator;
Figure 4 is a perspective view of a still further embodiment of a separator having two sets of traversing diagonal grooves on each of its top and bottom surfaces;
Figure 5 is an "H" shaped separator of the prior art;
Figure 6 shows a perspective view of an H-shaped separator modified to become an embodiment of a separator of this invention;
Figure 7 is a perspective view of an H-shaped separator modified to become a further embodiment of a separator of this invention having intersecting grooves; and
Figure 8 is a partial view of a plane fitted with a serrated blade to manufacture separators of this invention.

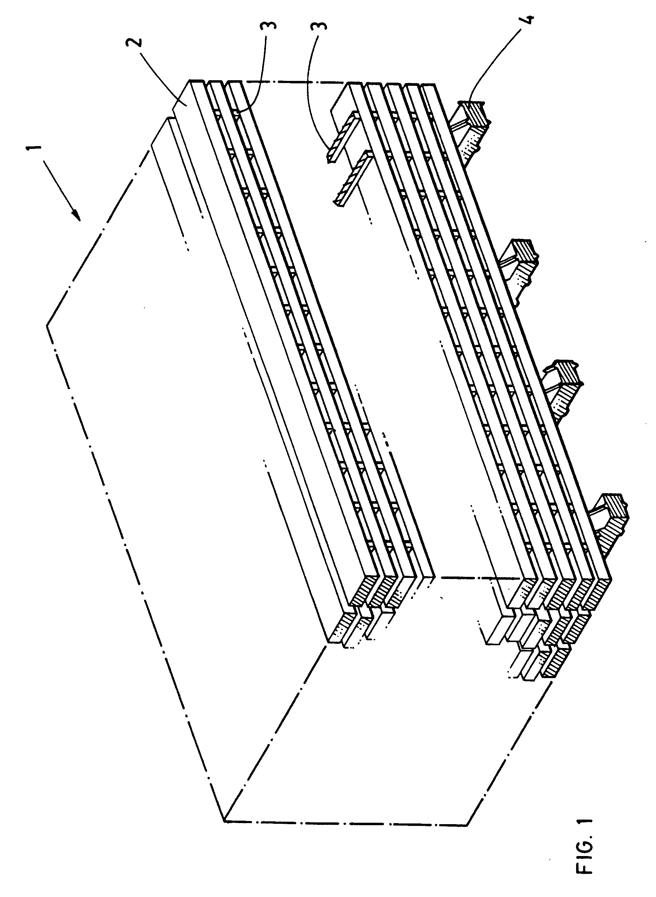

Figure 1 illustrates a stack 1 comprising boards 2 laid in courses upon separators (laths) 3. The stack 1 is supported upon separators (blocks) 4. Other similarly constructed stacks may be placed upon stack 1 to create a larger stack, tens of feet high (1 foot = 0.3m). The stack 1 is constructed for the purpose of air drying the boards or maintaining a dry condition. The lath separators 3 and the block separators 4 shown in figure 1 have diagonal grooves and ridges to reduce the amount of the separator in contact with the boards and to provide easy access for air circulation.

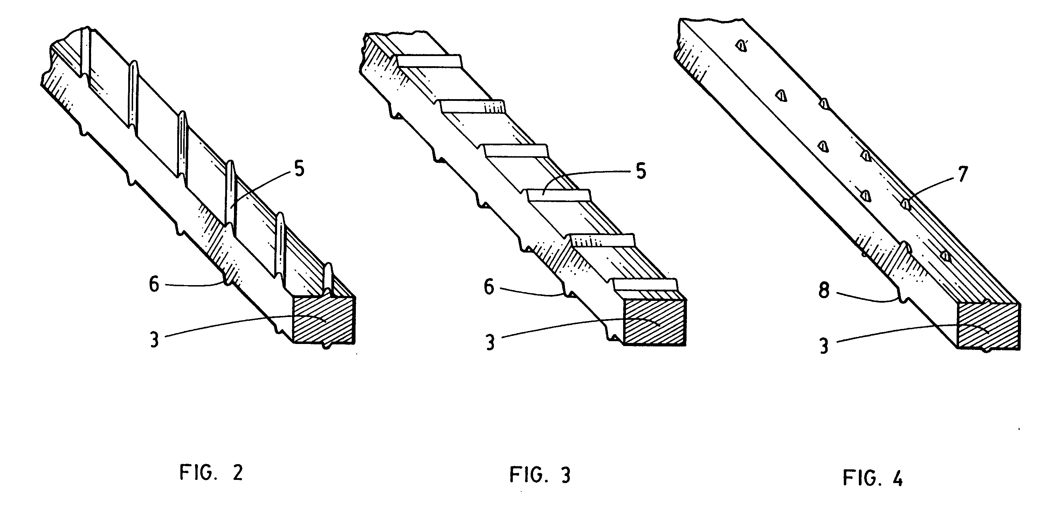

Figure 2 illustrates a preferred embodiment of a separator 3 of this invention which has diagonal ridges 5 on its top surface and similar diagonal ridges 6 on its bottom surface, There is no specific angle at which the ridges 5 or 6 must cross the length of the separator 3 in order to be effective for the purposes of this invention. The ridges 5 may run at a different angle to the ridges 6 and it is not required for the ridges 5 to be each exactly parallel to one another nor for the ridges 6 to be exactly parallel to one another. The main objectives are to provide numerous short grooves to facilitate air circulation, and to provide sufficient ridges to support the lumber, However, parallel grooves and ridges on each surface are likely to result from the mass manufacturing techniques described hereafter.

Figure 3 illustrates another example of a separator of this invention. In this example, the ridges 5 and 6 are cut perpendicularly to the length of the separator. This might be an ideal cut for it will have the shortest grooves to permit good air circulation and the shortest ridges in contact with the lumber, but it is unlikely to result from the manufacturing technique described hereafter unless guides are used to closely control the feed of separators to the plane. However, it is not necessary to do this to obtain the utility of the invention.

Figure 4 illustrates a different embodiment of this invention in which each separator 3 is passed through the cutting tool twice on each side in opposite directions so that on the first pass a ridge 5 will be formed whereas on the second pass a protrusion 7 will remain being the intersection point of two such ridges 5 on the same surface. Similarly, protrusions 8 may be formed on the bottom surface.

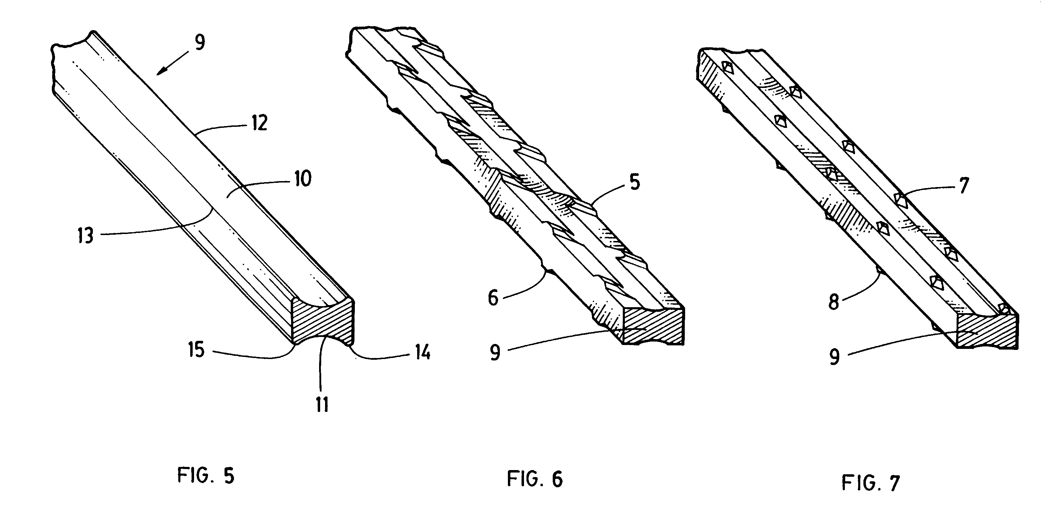

Figure 5 illustrates a prior art H-shaped separator 9 which has grooves 10 and 11 cut along its top and bottom surfaces centrally and parallel to the long axis of the separator 9. A separator of this construction reduces contact with the lumber because the upward protruding ridges 12 and 13 and the corresponding lower ridges 14 and 15 are the only contact with the lumber. But air circulation through the long grooves 10 and 11 is inefficient.

Figures 6 and 7 illustrate that an H-shaped separator may be adapted to become an embodiment of this invention. Figure 6 illustrates the H-shaped separator 9 of Figure 5 after having diagonal ridges 5 and 6 cut in its top and bottom surfaces through its ridges 12, 13, 14 and 15. Figure 7 illustrates the H-shaped separator 9 after having two intersecting ridges 5 cut through the ridges 12, 13, 14 and 15 on its top and bottom surfaces to form protrusions 7 and 8.

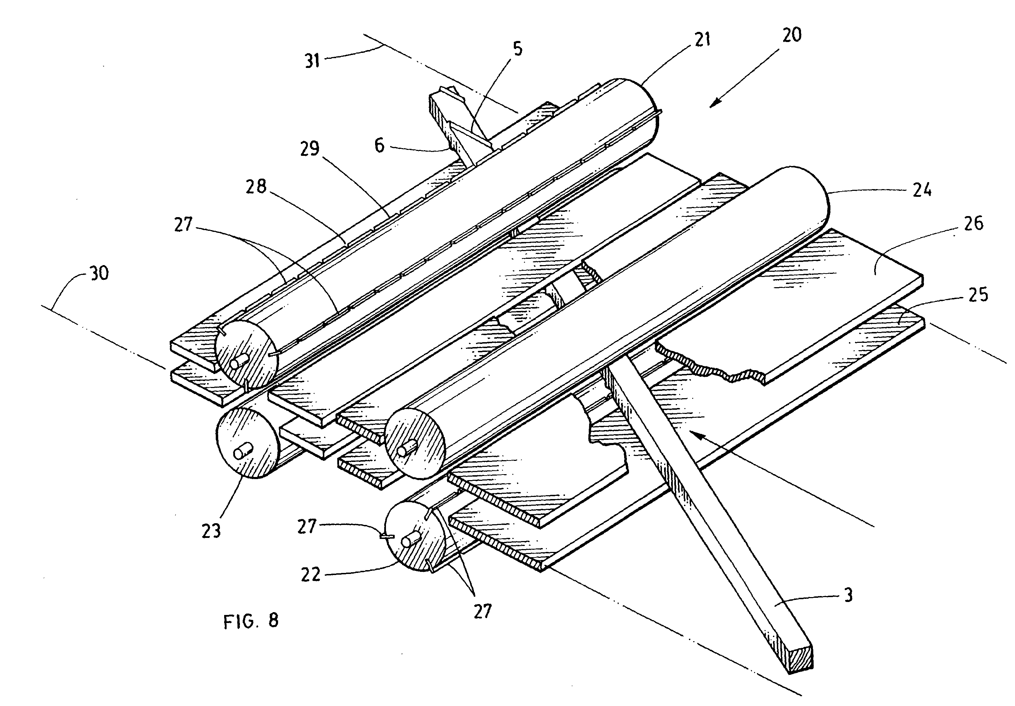

Figure 8 illustrates a planing machine ("plane") 20 having a top cutting drum 21 and a bottom cutting drum 22 and drums 23 and 24, respectively, in opposition to cutting drums 21 and 22. A bottom plane surface 25 and a top plane surface 26 form a structure for sliding a separator 3 into the plane 20 for cutting. Each of the cutting drums 21 and 22 is fitted with cutting blades 27 in a conventional manner. Each blade 27 is serrated with indentations 28 and protrusions 29. The protrusions 29 cut into a separator 3 to form the grooves between the ridges while the indentations 28 form the profile of each ridge. It will be appreciated that the grooves between ridges and the profile of the ridges may be adjusted by altering the shape of the indentations 28 and the protrusions 29. As illustrated in Figure 2, the ridges 5 may have a curved profile; as illustrated in Figure 3, a triangular profile; or, as illustrated in Figure 6, a trapezoid profile. The invention is not restricted to a particular shape of the profile, but a particular shape may be required where support or airflow is to be designed for particular uses.

It will also be appreciated that the ridges may not all have exactly the same profile because of irregularities in the wood or in the cutting tool. Some ridges may have a triangular profile while others on the same separator may have a trapezoidal profile because irregularities in the surface of the wood limit the exposure to the cutting tool. The groove and ridge design need to provide sufficient ridge depth to permit air to circulate between the separator 3 and a board 2 and to provide a shape which will minimise surface contact whilst providing sufficient support for the lumber in the stack and avoiding denting of the boards 2 by the ridges 5 or 6. It has been found that 5/8" (1.6 cm) between ridges 5 or 6 and a ridge height of about 1/8" (0.3 cm) with a triangular profile is suitable.

The embodiments of Figures 2, 3 and 6 may be constructed by passing a separator through a plane to cut ridges 5 and 6 in its top and bottom surfaces. The angle of the ridges to the length of the separator will be limited in one direction by the outside guides 30 and 31 of the plane and the length of the separator. Where separators are shorter than the distance between the outside guides 30 and 31, the angle of the cuts is at the discretion of the operator.

The embodiments in Figures 4 and 7 may be constructed by passing a separator through the plane 20 twice in opposite directions to make opposing cuts to form the protrusions 7 and 8. It is not necessary to make the opposing cuts at any particular angle to one another. However, it will be appreciated that each of the opposing cuts should transverse the other at a sufficient angle to leave adequate material to form protrusions 7 and 8. Similar comments may be made about the profile of protrusions 7 and 8 as were made about the ridges 5 and 6.

In the manufacturing operation, many separators may be placed side by side and passed through the plane 20. It will be appreciated that one of the advantages of this Invention is the low requirement for close tolerances. The angle of entry of a separator into the plane 20 is not critical as long as the cut is transverse to the length of the separator. It is also not required that the ridges of one separator be parallel to the ridges of another separator. Moreover, manufacturing tolerances are quite wide. Accordingly, rough and ready manufacture of a separator of this invention is possible in a lumber yard.

A method of manufacturing a separator of this invention comprises the steps of fitting serrated cutters into the cutting drums of a conventional planing machine, feeding separators through the plane, and using the serrated blades to cut grooves and ridges in the top and/or bottom surfaces of the separator.

It will be appreciated that variations in, and modifications to, the embodiments of the invention as described and illustrated may be made within the scope of this invention as defined by the appended claims.

## Claims

1. An elongate separator (3, 4) for separating one or more pieces of lumber (2) arranged in a plurality of courses to form a stack (1), the height of the separator (3, 4) being sufficient to separate two adjacent courses to permit longitudinal air circulation between two adjacent courses; wherein the length of the separator (3, 4) is sufficient to span one or more pieces of lumber (2) in a course;
the separator (3, 4) is made from wood and has a plurality of grooves traversing the length of the separator (3, 4) and extending transverse to the length of the separator (3, 4), said grooves defining a plurality of ridges (5, 6) each having a profile; the distance between adjacent ridges (5, 6), the ridge height, and the profile are such that the separator, in use,
(a) supports pieces of lumber on the ridges (5, 6) with a reduced contact between the separator and the pieces of lumber; while
(b) the grooves permit transverse air circulation from one side of the separator to the other, to avoid staining;
(c) and provides sufficient support for the lumber (2) in the stack (1), to avoid denting the lumber (2) by the ridges (5, 6).

2. An elongate separator (3, 4) as claimed in Claim 1, wherein the grooves and ridges (5, 6) run at an angle of between 30° and 90° to the length of the separator (3, 4).

3. An elongate separator (3, 4) as claimed in Claim 1, wherein the grooves and ridges (5, 6) extend substantially perpendicularly to the length of the separator (3, 4).

4. An elongate separator (3, 4) as claimed in any preceding claim, wherein said separator (3, 4) has a generally H-shaped cross-section.

5. An elongate separator (3, 4) as claimed in any preceding claim, wherein the ridges (5, 6) have a profile giving sharp peaks to minimise surface contact with the pieces of lumber.

6. An elongate separator (3, 4) as claimed in Claim 5, wherein the ridges (5, 6) have a triangular or trapezoidal profile.

7. An elongate separator (3, 4) as claimed in any preceding claim wherein the distance between adjacent ridges is 15·8 mm (0·625 inches) and wherein the ridge height is about 3·2 mm (0·125 inches).

8. An elongate separator (3, 4) as claimed in claim 1 further comprising a plurality of second grooves traversing the length of the separator (3, 4) in another direction to traverse the first grooves and to form a cross-hatching of grooves to permit air circulation within the grooves, and to form a plurality of protrusions (7, 8) able to support pieces of lumber on the protrusions (7, 8).

## Patentansprüche

1. Längliche Trennvorrichtung (3, 4) zum Trennen eines oder mehrere Stücke Schnittholz (2), das in einer Vielzahl von Lagen angeordnet ist, um einen Stapel (1) zu bilden, wobei die Höhe der Trennvorrichtung (3, 4) ausreicht, zwei benachbarte Lagen zu trennen, um eine Luftzirkulation in Längsrichtung zwischen zwei benachbarten Lagen zu erlauben; wobei die Länge der Trennvorrichtung (3, 4) ausreicht, eines oder mehrere Stücke Schnittholz (2) in einer Lage zu überspannen; die Trennvorrichtung (3, 4) besteht dabei aus Holz und weist eine Vielzahl von Nuten auf, die über die Länge der Trennvorrichtung (3, 4) verlaufen und sich quer zu der Länge der Trennvorrichtung (3, 4) erstrecken, wobei die Nuten eine Vielzahl von Rippen (5, 6) bilden, die jeweils ein Profil aufweisen; dabei sind der Abstand zwischen benachbarten Rippen (5, 6), die Rippenhöhe und das Profil derart ausgebildet, daß die Trennvorrichtung in Verwendung
(a) Stücke von Schnittholz an den Rippen (5, 6) mit einem verringerten Kontakt zwischen der Trennvorrichtung und den Stücken von Schnittholz abstützt, wobei
(b) die Nuten eine Quer-Luftzirkulation von einer Seite der Trennvorrichtung zu der anderen Seite erlauben, um Verfärbungen zu vermeiden;
(c) und eine ausreichende Abstützung für das Holz (2) in dem Stapel (1) bereitstellt, um ein Eindellen des Holzes durch die Rippen (5, 6) zu vermeiden.

2. Längliche Trennvorrichtung (3, 4) nach Anspruch 1, bei der die Nuten und Rippen (5, 6) unter einen Winkel zwischen 30 Grad und 90 Grad zu der Länge der Trennvorrichtung (3, 4) verlaufen.

3. Längliche Trennvorrichtung (3, 4) nach Anspruch 1, bei der die Nuten und Rippen (5,6) im wesentlichen senkrecht zu der Länge der Trennvorrichtung (3, 4) verlaufen.

4. Längliche Trennvorrichtung (3, 4) nach einem der vorgenannten Ansprüche, bei der die Trennvorrichtung (3, 4) einen im wesentlichen H-förmigen Querschnitt aufweist.

5. Längliche Trennvorrichtung (3, 4) nach einem der vorgenannten Ansprüche, bei der die Rippen (5, 6) ein Profil mit scharfen Erhebungen aufweist, um den Oberflächekontakt mit den Holzstücken zu minimieren.

6. Längliche Trennvorrichtung (3, 4) nach Anspruch 5, bei der die Rippen (5, 6) ein dreieckiges oder trapezförmiges Profil aufweisen.

7. Längliche Trennvorrichtung (3, 4) nach einem der vorgenannten Ansprüche, bei der der Abstand zwischen benachbarten Rippen 15,8 mm (0,625 Zoll) beträgt bei der die Rippenhöhe etwa 3,2 mm (0,125 Zoll) beträgt.

8. Längliche Trennvorrichtung (3, 4) nach Anspruch 1, umfassend weiterhin eine Vielzahl von zweiten Nuten, die über die Länge der Trennvorrichtung (3, 4) in einer weiteren Richtung quer zu den ersten Nuten verlaufen und so ein gekreuztes Nutmuster bilden, um eine Luftzirkulation in den Nuten zu ermöglichen und um eine Vielzahl von Erhebungen (7, 8) zu bilden, welche zur Abstützung der Holzstücke ausgebildet sind.

## Revendications

1. Séparateur allongé (3, 4) pour séparer un ou plusieurs morceaux de bois d'oeuvre (2) disposés en une pluralité de rangées pour former une pile (1), la hauteur du séparateur (3, 4) étant suffisante pour séparer deux rangées adjacentes pour mettre une circulation longitudinale d'air entre deux rangées adjacentes, la longueur du séparateur (3, 4) étant suffisante pour couvrir un ou plusieurs morceaux de bois d'oeuvre (2) dans une rangée, le séparateur (3, 4) étant fait en bois et ayant une pluralité de rainures traversant la longueur du séparateur (3, 4) et s'étendant transversalement à la longueur du séparateur (3, 4), les rainures définissant une pluralité de nervures (5, 6) ayant chacune un profil, la distance entre les nervures adjacentes (5, 6), la hauteur des nervures et le profil étant telle que le séparateur en utilisation
(a) supporte des morceaux de bois d'oeuvre sur les nervures (5, 6) avec un contact réduit entre le séparateur et les morceaux de bois d'oeuvre tandis que
(b) les rainures permettent une circulation transversale d'air d'un côté du séparateur à l'autre pour éviter la coloration
(c) et procure un support suffisant au bois d'oevure (2) dans la pile (1) pour éviter un bossellement du bois d'oeuvre par les nervures (5, 6).

2. Séparateur allongé (3, 4) selon la revendication 1 dans lequel les rainures et nervures (5, 6) font un angle entre 30° et 90° par rapport à la longueur du séparateur (3, 4).

3. Séparateur allongé (3, 4) selon la revendication 1 dans lequel les rainures (5, 6) s'étendent essentiellement perpendiculairement par rapport à la longueur du séparateur.

4. Séparateur allongé (3, 4) selon l'une quelconque des revendications précédentes dans lequel le séparateur (3, 4) a une section transversale substantiellement en forme de H.

5. Séparateur allongé (3, 4) selon Tune quelconque des revendications précédentes dans lequel les nervures (5, 6) ont un profil avec des crêtes saillantes pour minimaliser le contact en surface avec les morceaux de bois d'oeuvre.

6. Séparateur allongé (3, 4) selon la revendication 5 dans lequel les nervures (5, 6) ont un profil triangulaire ou trapézoïdal.

7. Séparateur allongé (3, 4) selon l'une quelconque des revendications précédentes dans lequel la distance entre les nervures adjacentes est de 15,8 mm (0,625 pouces) et dans lequel la hauteur des nervures est d'environ 3,2 mm (0,125 pouce).

8. Séparateur allongé (3, 4) selon la revendication 1, comprenant de plus une pluralité de secondes rainures transversalement par rapport à la longueur du séparateur (3, 4) dans une autre direction pour traverser les premières rainures et pour ainsi former une hachure croisée des rainures pour permettre une circulation d'air à l'intérieur des rainures et pour former une pluralité de saillies (7, 8) capables de supporter des morceaux de bois d'oeuvre sur les saillies (7, 8).
